# DEMANDE DE BREVET EUROPEEN

(11) **EP 1 748 019 A1**
(43) Date de publication de la demande: **31.01.2007**
(21) Numéro de dépôt: 06356094.0
(22) Date de dépôt: 18.07.2006
(51) Int. Cl.: B66C 13/40, H04B 7/08

(54) **Dispsitif de radiocommande pour grue à tour**

(30) Priorité: 29.07.2005 FR 0508161
(71) Demandeur: POTAIN, F-69130 Ecully (FR)
(72) Inventeur: Juraszek, Cédric, 71000 Macon (FR)
(74) Mandataire: Bratel, Gérard

(57) **Abrégé**

Le dispositif de radiocommande comprend un émetteur mobile (6) avec antenne (9), et un récepteur (7) placé sur la grue (1). Le récepteur (7) est équipé de deux antennes (12, 13) orientées perpendiculairement l'une à l'autre, notamment une première antenne (12) orientée verticalement et une seconde antenne (13) orientée horizontalement, de manière à améliorer la communication entre l'émetteur (6) et le récepteur (7). Les deux antennes (12, 13) sont reliées à des moyens de démodulation (15, 17) du signal reçu par chacune de ces antennes, moyens qui sont eux-mêmes reliés, côté sortie, à des moyens de décodage et d'analyse (18) des signaux démodulés (A, B), en vue de la commande de la grue (1).

## Description

La présente invention concerne, de façon générale, le domaine technique des grues à tour, et elle se rapporte, plus particulièrement, à un dispositif de radiocommande pour grue à tour.

Un dispositif de radiocommande pour grue à tour est décrit, par exemple, dans la demande de brevet européen EP 1149796 A2 au nom du Demandeur. De manière généralement connue, un tel dispositif de radiocommande comprend un émetteur placé dans un boîtier transportable de radiocommande, utilisé par l'opérateur chargé de conduire la grue, et un récepteur porté par la grue et transmettant des ordres de commande aux organes de la grue. L'émetteur comporte une antenne émettrice, tandis que le récepteur est pourvu d'une antenne réceptrice. De plus, le récepteur peut remplir une fonction d'émetteur pour renvoyer des informations d'aide à la conduite de la grue vers l'émetteur, qui dans ce cas joue le rôle de récepteur.

Lorsqu'une grue à tour doit être commandée avec un dispositif de radiocommande, tel que rappelé ci-dessus, on rencontre le problème de la propagation des ondes électromagnétiques, car ces ondes peuvent être déviées, réfléchies ou absorbées par des obstacles existants, tels que des bâtiments ou des matériels de chantier, ce qui peut causer des altérations du signal de commande de la grue, donc des arrêts brutaux du fonctionnement de la grue. En effet, les règles de sécurité en vigueur imposent que les mouvements de la grue soient arrêtés, si la communication radio entre l'émetteur et le récepteur est coupée.

Les causes de coupures dans la liaison radio entre l'émetteur et le récepteur peuvent aussi résider dans la position ou l'orientation du boîtier de radiocommande, contenant l'émetteur. Par exemple, un émetteur parfaitement horizontal fonctionne bien, tandis que le même émetteur incliné sur l'horizontale ne fonctionne pas. Une autre cause de dysfonctionnement d'un dispositif de radiocommande peut être la position particulière de l'émetteur par rapport au récepteur ; ainsi, la situation idéale de l'opérateur pour conduire la grue est une situation proche de la charge à lever, donc une position située sous la flèche de la grue, mais la présence de la flèche perturbe alors la transmission des ondes.

Par ailleurs, la distance importante entre l'émetteur, qui le plus souvent est positionné au sol donc à la base de la grue, et le récepteur qui est assez habituellement placé en partie supérieure de la grue, peut rendre la communication radio plus difficile.

Pour tenter de supprimer ces inconvénients, il a déjà été envisagé d'adapter, sur le récepteur porté par la grue, deux antennes réceptrices parallèles, décalées d'une certaine distance l'une par rapport à l'autre. Ce principe est décrit dans la demande de brevet japonais JP 2162928 A directement appliquée à la radiocommande de grues, ou dans la demande de brevet européen EP 1458120 A2 appliquée au domaine de la téléphonie. Cependant, une telle solution ne résout pas tous les problèmes précédemment exposés, notamment celui rencontré dans le cas d'un émetteur occupant une position inclinée.

La présente invention vise à résoudre l'ensemble des problèmes ici posés, et elle a donc pour but premier d'améliorer la communication radio entre l'émetteur et le récepteur, en supprimant les "zones d'ombre" et en rendant cette communication moins tributaire de la position ou de l'orientation de l'émetteur, de sorte que le risque de coupure de la communication radio soit diminué. L'invention a aussi pour objectif d'avertir l'opérateur, utilisateur de l'émetteur, qu'il est en limite de portée pour la communication radio, ou dans une zone où la communication radio risque d'être coupée, afin qu'il puisse se placer dans une zone de meilleure transmission. Enfin, toujours dans ce contexte, l'invention vise encore à éviter d'effectuer de nombreux ajustements de la position de l'antenne, notamment en polarisation horizontale ou en position verticale, en fonction de la configuration du chantier et de la position de l'émetteur.

A cet effet, l'invention a pour objet un dispositif de radiocommande pour grue à tour, le dispositif comprenant un émetteur mobile avec antenne, et un récepteur avec antenne placé sur la grue, ce dispositif de radiocommande étant caractérisé essentiellement par le fait que le récepteur, placé sur la grue, est équipé d'au moins deux antennes réceptrices orientées perpendiculairement l'une à l'autre, notamment une première antenne orientée verticalement, et une seconde antenne orientée horizontalement, et par le fait que les antennes au nombre de deux au moins, équipant le récepteur, sont reliées à des moyens de démodulation du signal reçu par chacune de ces antennes, les moyens de démodulation étant eux-mêmes reliés, du côté de leur sortie, à des moyens de décodage et d'analyse des signaux démodulés, en vue de la commande de la grue.

La combinaison d'au moins deux antennes, du côté du récepteur, améliore considérablement la réception des signaux radio de commande de la grue, transmis depuis l'émetteur, et permet notamment de commander la grue en détectant et sélectionnant le meilleur des deux signaux reçus, ou l'unique signal reçu si l'autre est absent, grâce à une constitution appropriée du récepteur.

Dans un mode de réalisation, le récepteur comprend un premier démodulateur relié à l'une des antennes, et un second démodulateur relié à l'autre antenne, les sorties respectives des deux démodulateurs étant reliées, l'une et l'autre, à un même décodeur et analyseur de signal.

Les moyens de démodulation associés aux antennes réceptrices et les moyens de décodage et d'analyse, sont ici notamment conçus de telle sorte que :
- lorsque les deux signaux respectivement captés par les deux antennes du récepteur sont présents simultanément, au moins l'un d'eux est utilisé pour la commande de la grue,
- lorsque ces deux signaux sont simultanément absents, la commande de la grue est arrêtée, notamment après une temporisation,
- lorsqu'un seul de ces deux signaux est absent, l'autre signal est utilisé pour la commande de la grue.

De plus, lorsqu'un seul des deux signaux respectivement captés par les deux antennes du récepteur est absent, une information spécifique est avantageusement renvoyée par le récepteur vers l'émetteur, ceci pour signaler à l'opérateur que la communication radio risque d'être coupée, en cas de perte de l'autre signal. L'opérateur peut alors tenter de se placer, avec son émetteur, dans une position où la communication radio avec le récepteur sera meilleure.

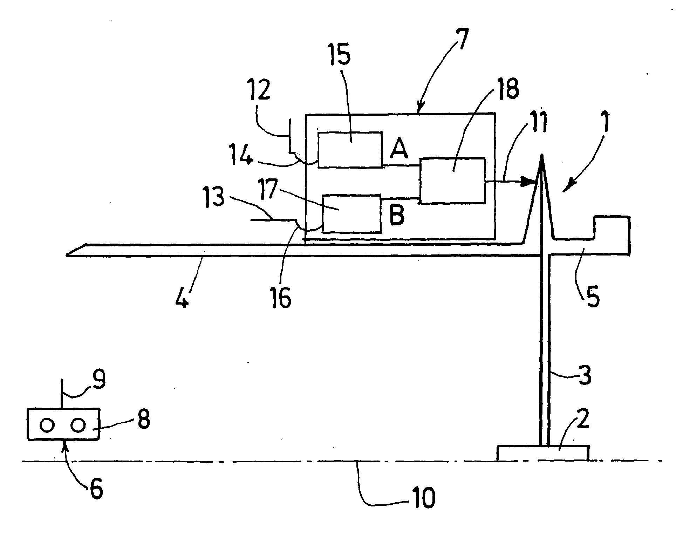

L'invention sera mieux comprise à l'aide de la description qui suit, en référence au dessin schématique annexé représentant, à titre d'exemple, une forme d'exécution de ce dispositif de radiocommande pour grue à tour.

L'unique figure du dessin montre, très schématiquement, une grue à tour 1 avec un châssis de base 2, un mât 3, une flèche 4 et une contre-flèche 5. La grue à tour 1 est équipée d'un dispositif de radiocommande, composé d'un émetteur 6 et d'un récepteur 7.

L'émetteur 6 se présente comme un boîtier de radiocommande 8 mobile, mis à la disposition du conducteur de la grue 1, le boîtier de radiocommande 8 étant pourvu d'une antenne émettrice 9. Ce boîtier de radiocommande 8 est notamment utilisé au niveau du sol 10, sur lequel est installé le châssis de base 2 de la grue 1.

Le récepteur 7 est porté par la grue 1 et, notamment, positionné au sommet de cette grue 1. Il reçoit les ordres émis depuis le boîtier de radiocommande 8 par le conducteur de la grue, et transmet de façon filaire les commandes à la grue 1, comme symbolisé par la flèche de sortie 11. Accessoirement, le récepteur 7 remplit aussi la fonction d'émetteur, pour renvoyer des informations d'aide à la conduite de la grue 1 vers l'émetteur 6, qui dans ce cas joue le rôle de récepteur.

Le récepteur 7 possède deux antennes réceptrices 12 et 13, orientées perpendiculairement l'une à l'autre, par exemple une première antenne 12 orientée verticalement, et une seconde antenne 13 orientée horizontalement. La première antenne 12 est reliée en 14 à un premier démodulateur 15, tandis que la seconde antenne 13 est reliée en 16 à un second démodulateur 17. Les sorties respectives des deux démodulateurs 15 et 17 sont reliées, l'une et l'autre, à un même décodeur et analyseur de signal 18, qui possède la sortie 11 déjà mentionnée.

En cours de fonctionnement, l'émetteur 6 diffuse des ondes électromagnétiques, par son antenne émettrice 9. Au niveau du récepteur 7, le signal reçu par chacune des deux antennes réceptrices 12 et 13 est démodulé, respectivement dans les démodulateurs 15 et 17. Les deux signaux ainsi démodulés, désignés respectivement par A et B, sont amenés au décodeur et analyseur 18, et peuvent être utilisés pour la commande de la grue 1.

Lorsque les deux signaux A et B sont présents simultanément, l'un de ces deux signaux est effectivement utilisé pour la commande de la grue 1.

Lorsque les deux signaux A et B sont simultanément absents, la commande de la grue 1 est arrêtée automatiquement, après une temporisation.

Lorsqu'un seul des deux signaux A et B est absent, l'autre signal B ou A encore présent est utilisé pour la commande de la grue 1. Dans une telle situation d'absence de l'un des deux signaux A et B, une information spécifique est renvoyée par le récepteur 7 vers l'émetteur 6, pour signaler à l'opérateur que la communication radio risque d'être coupée, en cas de perte de l'autre signal. L'opérateur ainsi averti peut tenter de placer l'émetteur 6 dans une zone de meilleure transmission.

L'on ne s'éloignerait pas du cadre de l'invention, telle que définie dans les revendications annexées :
- en prévoyant une troisième antenne réceptrice, perpendiculaire au plan défini par les deux autres ;
- en ajoutant ou supprimant des fonctions annexes, par exemple en n'utilisant pas le retour d'information signalant à l'émetteur la disparition de l'un des deux signaux A et B ;
- en ayant recours à tous moyens fonctionnellement équivalents, notamment en remplaçant les deux démodulateurs distincts, respectivement associés aux deux antennes réceptrices, par un seul démodulateur commun, spécialement conçu ;
- enfin, en destinant le dispositif de radiocommande à des grues à tour de toute configuration, la silhouette de grue représentée au dessin était purement illustrative.

## Revendications

1. Dispositif de radiocommande pour grue à tour, comprenant un émetteur mobile (6) avec antenne (9), et un récepteur (7) avec antenne placé sur la grue (1), **caractérisé en ce que** le récepteur (7), placé sur la grue (1), est équipé d'au moins deux antennes réceptrices (12, 13) orientées perpendiculairement l'une à l'autre, notamment une première antenne (12) orientée verticalement, et une seconde antenne (13) orientée horizontalement, et **en ce que** les antennes (12, 13) au nombre de deux au moins, équipant le récepteur (7), sont reliées à des moyens de démodulation (15, 17) du signal reçu par chacune de ces antennes, les moyens de démodulation (15, 17) étant eux-mêmes reliés, du côté de leur sortie, à des moyens de décodage et d'analyse (18) des signaux démodulés (A, B), en vue de la commande de la grue (1).

2. Dispositif de radiocommande pour grue à tour selon la revendication 1, **caractérisé en ce que** le récepteur (7) comprend un premier démodulateur (15) relié à l'une des antennes (12), et un second démodulateur (17) relié à l'autre antenne (13), les sorties respectives des deux démodulateurs (15, 17) étant reliées, l'une et l'autre, à un même décodeur et analyseur de signal (18).

3. Dispositif de radiocommande pour grue à tour selon la revendication 1 ou 2, **caractérisé en ce que** les moyens de démodulation (15, 17) associés aux antennes réceptrices (12, 13) et les moyens de décodage et d'analyse (18) sont conçus de telle sorte que :
- lorsque les deux signaux (A, B) respectivement captés par les deux antennes (12, 13) du récepteur (7) sont présents simultanément, au moins l'un d'eux est utilisé pour la commande de la grue (1),
- lorsque ces deux signaux (A, B) sont simultanément absents, la commande de la grue (1) est arrêtée, notamment après une temporisation,
- lorsqu'un seul de ces deux signaux (A, B) est absent, l'autre signal est utilisé pour la commande de la grue (1).

4. Dispositif de radiocommande pour grue à tour selon la revendication 3, **caractérisé en ce que**, lorsqu'un seul des deux signaux (A, B) respectivement captés par les deux antennes (12, 13) du récepteur (7) est absent, une information spécifique est renvoyée par le récepteur (7) vers l'émetteur (6).
